# EUROPÄISCHE PATENTSCHRIFT

(11) **EP 0 483 256 B1**
(45) Veröffentlichungstag und Bekanntmachung des Hinweises auf die Patenterteilung: **15.06.1994**
(21) Anmeldenummer: 90911598.2
(22) Anmeldetag: 05.07.1990
(51) Int. Cl.: B01J 35/04, B01D 53/36, F01N 3/28

(54) **WABENKÖRPER MIT INTERNEN STRÖMUNGSLEITFLÄCHEN, INSBESONDERE KATALYSATORKÖRPER FÜR KRAFTFAHRZEUGE**
HONEYCOMB BODY WITH INTERNAL FLOW-CONDUCTING SURFACES, IN PARTICULAR CATALYST BODY FOR MOTOR VEHICLES
ELEMENT ALVEOLE AVEC DES SURFACES INTERNES DE GUIDAGE DU FLUX, EN PARTICULIER ELEMENTS DE CATALYSEURS POUR VEHICULES A MOTEUR

(30) Priorität: 18.07.1989 DE 8908738 U
(43) Veröffentlichungstag der Anmeldung: 06.05.1992
(73) Patentinhaber: Emitec Gesellschaft für Emissionstechnologie mbH, 53797 Lohmar (DE)
(72) Erfinder: SWARS, Helmut, D-5060 Bergisch Gladbach 1 (DE)
(74) Vertreter: Kahlhöfer, Hermann, Dipl.-Phys.
(86) Internationale Anmeldenummer: EP9001084
(87) Internationale Veröffentlichungsnummer: WO9101178

(56) Entgegenhaltungen:
- EP-A- 0 130 745
- EP-A- 0 186 801
- EP-A- 0 218 417
- EP-A- 0 270 050
- DE-A- 3 510 715
- DE-U- 8 530 206
- GB-A- 2 001 547
- US-A- 3 839 535

## Beschreibung

Die vorliegende Erfindung betrifft einen Wabenkörper, insbesondere Katalysatorkörper für Kraftfahrzeuge, aus lagenweise angeordneten, zumindest in Teilbereichen strukturierten Blechen, die die Wände einer Vielzahl von für ein Fluid durchströmbaren Kanälen bilden. Solche metallischen Katalysator-Trägerkörper sind in vielen Varianten bekannt und beispielsweise in der EP-A-02 20 468, der EP-A-02 79 159, der EP-A-02 45 737 oder der EP-A-02 45 736 beschrieben.

Schon lange ist bekannt, daß in den meisten Anwendungsfällen und bei den üblichen Dimensionierungen solcher Wabenkörper die Strömung in den Kanälen im wesentlichen laminar ist, da sehr kleine Kanalquerschnitte verwendet werden. Unter diesen Bedingungen bauen sich an den Kanalwänden relativ dicke Grenzschichten auf, welche einen Kontakt der Kernströmung in den Kanälen mit den Wänden verringern. Diffusionsprozesse zwischen Kernströmung und Grenzschichten gleichen dies zwar teilweise aus, jedoch wurde seit langem versucht, durch besondere Strukturierung des Wabenkörpers hier Verbesserungen zu schaffen.

Aus der DE-PS-11 92 624 ist beispielsweise bekannt, den Wabenkörper aus vielen hintereinander angeordneten Scheiben herzustellen, deren Kanäle in Strömungsrichtung gegeneinander versetzt sind. Ein so zusammengesetzter Körper hat in seinem Inneren immer wieder neue Anströmkanten, an denen die Strömung geteilt wird. Dabei wurden vorzugsweise Scheiben aus spiralig gewickelten glatten und gewellten Blechen hintereinandergesetzt, wobei die Wickelrichtung jeweils geändert wurde. Diese

Aus der GB-A- 2 001 547 sind Formschluß-Verbindungen zwischen Blechlagen bekannt, die u.a. durch Blechlappen, die in benachbarte Öffnungen ragen, gebildet werden. Eine systematische Beeinflussung der Strömung findet dadurch jedoch nicht statt.

Maßnahme ist einerseits fertigungstechnisch wegen der vielen kleinen Scheiben sehr aufwendig und führt andererseits zu unregelmäßigen Konstellationen der gegeneinander versetzten Kanäle, was bei der Beschichtung und beim späteren Betrieb von Nachteil sein kann.

In der EP-A-01 52 560 und der EP-A-01 86 801 werden Möglichkeiten zur Verwirklichung desselben Gedankens beschrieben, die fertigungstechnisch günstiger sind, da ein Wabenkörper nicht aus mehreren Scheiben zusammengesetzt werden muß. Allerdings bringen es die beschriebenen Wellformen mit sich, daß erhebliche Flächenanteile der verwendeten Bleche aneinanderliegen, wodurch die für katalytische Kontaktierung ausnutzbare Fläche im Verhältnis zum Materialeinsatz ungünstig wird.

In einem zusammenfassenden Artikel von M. Nonnenmann: "Neue Metallträger für Abgaskatalysatoren mit erhöhter Aktivität und innerem Strömungsausgleich", ATZ Automobiltechnische Zeitschrift 91 (1989) 4, Seiten 185 - 192, in dem die Vorteile und Wirkungen von in Strömungsrichtung gegeneinander versetzten Strömungskanälen beschrieben werden, wird auch eine Variante vorgeschlagen, bei der statt einer glatten Blechlage ein sog. Mikro-Wellband verwendet wird, wodurch die Flächenausnutzung etwas günstiger wird. Ein solches Mikro-Wellband bildet jedoch zusammen mit glatten Anlageflächen an anderes strukturierten Blechbändern winzige Kanäle, welche sich bei einer späteren Beschichtung zusetzen und damit eine beachtliche Erhöhung des Druckverlustes und wiederum einen Verlust an aktiver Fläche und einen unnötigen Verbrauch an Beschichtungsmasse bewirken. Trotzdem zeigt der Artikel, daß aufgrund der fertigungstechnischen Möglichkeiten ein metallischer Katalysator-Trägerkörper einem extrudierten keramischen Körper überlegen ist, da durch konstruktive Maßnahmen die Strömungsverhältnisse im Inneren beeinflußt werden können. Dabei kann ein zusätzlicher Effekt auftreten, nämlich die Quervermischung von Strömungen in den einzelnen Kanälen durch entsprechende Verbindungswege bzw. Öffnungen in den Kanalwänden. Eine gezielte und umfangreiche Quervermischung läßt sich mit den beschriebenen Strukturen jedoch nicht erreichen, da ein starkes Druckgefälle, was für eine starke Quervermischung nötig wäre nicht existiert. Die Strömung wird zwar immer wieder neu aufgespalten, jedoch führt dies nicht zu einer gezielten Quervermischung, da sich die Strömungsfäden anschließend auch wieder vereinigen. Bei spiralförmig gewickelten Körpern ist dabei eine Quervermischung von innen nach außen überhaupt nur durch Öffnungen in den glatten Blechlagen möglich, jedoch ist der entstehende Effekt äußerst gering.

Im Hinblick auf den bisher beschriebenen Stand der Technik ist es Aufgabe der vorliegenden Erfindung, einen Wabenkörper zu schaffen, bei welchem sich durchgehende Grenzschichten an den Kanalwänden beim Hindurchströmen einen Fluids nicht ausbilden können und bei dem eine gezielte und umfassende Quervermischung, insbesondere zwischen dem Zentralbereich und dem Außenbereich stattfindet. Dabei sollen auch fertigungstechnische Gesichtspunkte berücksichtigt werden, um den Aufwand bei der Herstellung solcher Wabenkörper gering zu halten.

Zur Lösung dieser Aufgabe eignet sich ein Wabenkörper, insbesondere Katalysatorkörper für Kraftfahrzeuge, aus lagenweise angeordneten, zumindest in Teilbereichen strukturierten Blechen, die die Wände einer Vielzahl von für ein Fluid durchströmbaren Kanälen bilden, bei dem zumindest in einem Teil der Kanalwände Öffnungen vorhanden sind, denen Strömungsleitflächen zugordnet sind, welche schräg zur Kanalwand verlaufen, wobei der Wabenkörper aus einem Stapel zumindest im Außenbereich etwa evolventenförmig und/oder S-förmig verlaufenden strukturierten Blechlagen besteht, wobei die Strömungsleitflächen so gerichtet sind, daß sie Teilströme von Fluid entlang den Blechlagen von innen nach außen oder umgekehrt leiten können. Eine entscheidende Erkenntnis der vorliegenden Erfindung besteht darin, daß einfache Öffnungen in den Kanalwänden mangels einer Druckdifferenz zwischen benachbarten Kanälen kaum zu einer Quervermischung führen. Solche Öffnungen verhindern auch nicht die Ausbildung einer Grenzschicht bei laminarer Strömung. Werden jedoch den Öffnungen Strömungsleitflächen zugeordnet, welche im wandnahen Bereich einen Teil der Strömung abschälen und durch die Öffnung leiten, so werden damit zwei Funktionen gleichzeitig erfüllt. Zum einen wird die wandnahe Grenzschicht unterbrochen, so daß Teile der Kernströmung nunmehr in Kontakt mit der nachfolgenden Kanalwand kommen, zum anderen wird eine zwangsweise Querströmung durch die Strömungsleitfläche hervorgerufen, was zu einer gezielten Beeinflussung der Strömungsverteilung in den einzelnen Kanälen geeignet ist.

Fertigungstechnisch günstig ist es, wenn die Strömungsleitflächen aus den Kanalwänden unter Belassung entsprechender Öffnungen herausgedrückt werden, da auf diese Weise gleichzeitig Öffnungen und Strömungsleitwände entstehen. Die getrennte Herstellung von beispielsweise geprägten Strömungsleitwänden und gestanzten Öffnungen ist jedoch möglich. Im Gegensatz zu den bekannten Wabenkörpern, in denen im wesentlichen alle Kanalwände und sonstigen Flächen parallel zur Strömung ausgerichtet sind, sollen die Strömungsleitflächen bei der vorliegenden Erfindung so ausgebildet sein, daß sie einen Teil des in einem Kanal strömenden Fluids in einen benachbarten Kanal umlenken können. Günstig ist es dafür, daß die Strömungsleitflächen in Bezug auf die Mittelachse oder Mittelebene des Wabenkörpers schräg nach außen bzw. schräg nach innen weisen, d. h. eine Richtungskomponente in radialer Richtung haben. Dies ist deshalb von Bedeutung, weil eine quer zur Strömung erfolgende Vermischung zwischen Kanälen, die in gleichem Abstand vom Zentralbereich des Wabenkörpers liegen, nicht so vorteilhaft ist, wie eine Vermischung zwischen den äußeren, meist kälteren Bereichen und dem Inneren, meist wärmeren Zentralbereich.

Ist der Wabenkörper im wesentlichen aus abwechselnden Lagen glatter und gewellter Bleche aufgebaut, so brauchen in diesem Falle die Strömungsleitflächen und Öffnungen nur im Flankenbereich der Wellen angeordnet zu sein. Da die einzelnen Lagen nach außen führen, ist es nicht unbedingt notwendig, Öffnungen in den glatten Blechen vorzusehen. Zur Verstärkung des Effektes kann dies jedoch trotzdem der Fall sein, wobei zusätzliche Öffnungen in den glatten Blechen am günstigsten ohne zugehörige Strömungsleitflächen auszubilden sind, da dies die Fertigung erleichtert und ein Aufeinandertreffen von Wellungen und Strömungsleitflächen mit undefiniertem Abstand verhindern.

Um eine gute Wirksamkeit der Strömungsleitflächen zu erreichen, sollten diese 5 - 50 % des in ihrer direkten Umgebung gegebenen Kanalquerschnittes überdecken. Günstig für ein Abschälen der Grenzschicht sind Strömungsleitflächen, die etwa 10 - 20 % des Kanalquerschnittes abdecken.

Für die räumliche Anordnung der Strömungsleitflächen gibt es die Möglichkeit, diese schräg entgegen der Strömungsrichtung des Fluides auszurichten oder schräg in Strömungsrichtung. Im ersten Fall wird ein Teil des Fluids durch die Kanalwand gedrückt, im zweiten Fall gesaugt. Im allgemeinen wird es günstig sein, die Strömungsleitflächen in einem spitzen Winkel auf die Kanalwand zulaufen zu lassen, wobei die Neigung der strömungsleitwand zur Kanalwand einen Einfluß auf eventuelle Abrißwirbel hinter der Strömungsleitfläche hat. Hier muß ein Optimum zwischen gewünschter Turbulenz und dem Druckverlust gesucht werden. Im allgemeinen wird es günstig sein, wegen der sich schnell wieder ausbildenden laminaren Strömung in den Kanälen Strömungsleitflächen und Öffnungen im Abstand von 5 - 20 mm, vorzugsweise 10 - 15 mm anzuordnen. Die Wirkung der Strömungsleitflächen ermöglicht es, die Kanalquerschnitte insgesamt größer zu machen, was Material einspart und die Fertigung der kleinen Strukturen erleichtert, ohne daß die Wirksamkeit der katalytischen Umsetzung beeinträchtigt wird.

Ein ganz entscheidender Vorteil der vorliegenden Erfindung besteht darin, daß die Strömungstechnischen Effekte der Strömungsleitflächen durch geeignete Wahl von Anzahl, Größe und Richtung dieser Flächen so aufsummiert werden können, daß sie im Mittel einen Teil eines im Zentralbereich des Wabenkörpers strömenden Fluids nach außen leiten können. Üblicherweise bildet sich auch in einem Wabenkörper ein Strömungsprofil aus, welches im Querschnitt etwa parabelförmig ist, so daß in den Kanälen im Zentralbereich mehr Fluid und schneller strömt als im Außenbereich. Leiten jedoch die meisten Strömungsleitflächen einen Teil des Fluids aus inneren Kanälen in weiter außen liegende Kanäle, so kann das Strömungsprofil vergleichmäßigt werden. Dies steigert die katalytische Umsetzung, da der Wabenkörper gleichmäßiger ausgenutzt wird und Diffusionsprozesse begünstig werden.

Zusätzlich bietet sich die Möglichkeit, die Strömung im Wabenkörper ganz nach Wunsch zu beeinflussen, indem die Strömungsleitflächen entsprechend zueinander angeordnet werden. So können in Teilbereichen des Wabenkörpers Teilströme von Fluid von außen nach innen und in einem anderen Teilbereich von innen nach außen geleitet werden. Dies vergleichmäßigt die Temperaturverteilung und baut den Katalysator schädigende Temperaturspitzen ab. Wie anhand der Zeichnung noch näher erläutert wird, kann ein Wabenkörper auch aus mehreren Teilbereichen oder Teilkörpern zusammengesetzt sein, welche im Mittel unterschiedliche Charakteristiken bezüglich der Verteilung der Fluidströme aufweisen. So kann beispielsweise der erste Teilkörper oder Teilbereich für eine gleichmäßige Verteilung der Fluidströme über den gesamten Querschnitt des Wabenkörpers ausgebildet werden, während anschließende Teilkörper oder Teilbereiche zur gleichmäßigen Vermischung der Fluidströme ausgebildet sind.

Eine große Variationsbreite besteht in der Ausbildung der Öffnungen und der Strömungsleitflächen, wie beispielhaft anhand der Zeichnung gezeigt wird. Mittels Stanz- oder Prägewerkzeugen können solche Strukturen hergestellt werden. Als für die Fertigungstechnik von ganz besonderer Bedeutung hat sich erwiesen, daß die meisten Schlitze oder Öffnungen in einem glatten Metallband beim anschließenden Wellen des Bandes so verformt werden, daß ihre Berandungslinien nicht der sonstigen Wellform des Bandes folgen. Es entstehen ohne weitere Zusatzmaßnahmen Strömungsleitflächen, deren Ausrichtung durch die Form und Lage der Schlitze bzw. Öffnungen vorher definiert festgelegt werden kann. Aus fertigungstechnischen Gründen ist es daher vorzuziehen, die Öffnungen und Strömungsleitflächen im wesentlichen im Flankenbereich der strukturierten Bleche anzuordnen, während die glatten Bleche ohne Öffnungen oder zumindest ohne Strömungsleitflächen gestaltet werden.

Das Umfeld und Ausführungsbeispiele der Erfindung werden im folgenden anhand der Zeichnung näher erläutert. Die hier gemachten Aussagen beziehen sich im wesentlichen auf die Anwendung solcher Wabenkörper als Katalysator-Trägerkörper, jedoch ist dies nicht einschränkend auszulegen. Auch für andere Verwendungszwecke sind erfindungsgemäße Wabenkörper geeignet.

Es zeigen
Figur 1 einen Blechstreifen mit verschiedenen Möglichkeiten zur Anbringung von Öffnungen und Strömungsleitflächen,
Figur 2 ein gewelltes Blech mit Strömungsleitflächen und Öffnungen im Flankenbereich,
Figur 3 einen Ausschnitt aus einem Wabenkörper, hergestellt unter Verwendung eines Bleches gemäß Figur 2,
Figur 4 einen schematischen Längsaxialschnitt durch einen erfindungsgemäßen Wabenkörper mit Strömungsleitflächen, die die Strömung im Mittel nach außen umlenken,
Figur 5 einen Wabenkörper mit zumindest im Außenbereich evolventenförmig oder spiralförmig verlaufenden Blechlagen zur Veranschaulichung der möglichen Strömungsführungen,
Figur 6 einen Längsaxialschnitt durch einen Wabenkörper mit Strömungsumlenkung in Teilbereichen nach außen und in Teilbereichen nach innen,
Figur 7 einen Querschnitt durch einen Wabenkörper mit etwa S-förmigen Blechlagen, bei dem die Strömungen innerhalb zweier benachbarter Lagen entgegengesetzt umgelegt werden,
Figur 8 einen Wabenkörper aus mehreren Teilkörpern mit im Mittel unterschiedlichen Charakteristiken bezüglich der Verteilung der Fluidströme,
Figur 9 ein anderes Ausführungsbeispiel mit Teilkörpern unterschiedlicher Strömungscharakteristik und
Figur 10 ein gewelltes Blech mit einer etwa S-förmigen Öffnung und der beim Wellen entstehenden Ausbildung der Strömungsleitflächen.

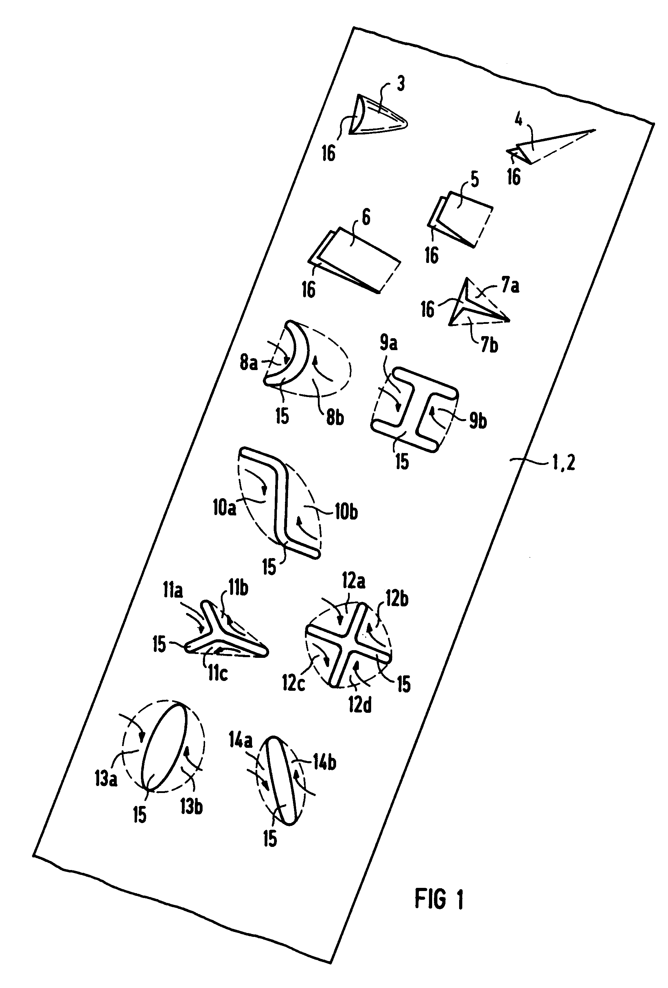

Figur 1 zeigt einige Beispiele aus der Vielzahl der möglichen Konstellationen von Öffnungen und Strömungsleitflächen. Die hier gezeigte Auswahl soll keineswegs einschränkend sein, jedoch die große Variationsbreite veranschaulichen. Ein Stahlblech, insbesondere aus hochtemperatur-korrosionsfestem Stahl, mit einer Dicke von beispielsweise 0,03 - 0,06 mm, wird auf seiner Länge mit einer Vielzahl von Öffnungen 15, 16 und Strömungsleitflächen versehen. Hierzu ist zu bemerken, daß in Figur 1 die Öffnungen und Strömungsleitflächen in ihren Maßen um ein Vielfaches zu groß gezeichnet sind, um ihre Form zu veranschaulichen. Tatsächlich sind die Maße jeweils Bruchteile von Millimetern, und die Folie ist relativ dicht mit diesen Öffnungen übersät. Um gezielt Öffnungen in den Flankenbereich von Wellungen einbringen zu können, muß gegebenenfalls eine Schlitz- oder Stanzvorrichtung mit einer anschließenden Wellvorrichtung synchronisiert werden, was jedoch fertigungstechnisch möglich ist. Man kann zumindest zwei Arten von Öffnungen unterscheiden, nämlich reine Schlitze 16, bei denen kein Material weggenommen ist, und Ausstanzungen 15, bei welchen eine bestimmte Form ausgestanzt wird. Letztere sind besonders günstig, da beim späteren Beschichten kein Zuschmieren zu befürchten ist. In Figur 1 ist zunächst eine sogenannte Hutze 3 als Strömungsleitfläche dargestellt, welche ungefähr die Form eines herausgedrückten Kegelmantelsegmentes hat mit einer offenen Grundfläche in Form eines Kreissegmentes. Ein langgestrecktes Dreieck 4 ist ebenfalls eine gut geeignete Strömungsleitfläche, die je nach ihrer Orientierung zur Strömung zusätzliche Abrißwirbel erzeugen kann. Auch trapezförmige 5 oder viereckige 6 Strömungsleitflächen eignen sich, sofern ihre Abmessungen die Schwingungseigenschaften berücksichtigen als Strömungsleitflächen. Auch die aus einem T-förmigen Schlitz 16 herausklappbaren Dreiecke 7a, 7b haben günstige Eigenschaften. Bei einer sichelförmigen Ausstanzung 15, welche quer oder schräg zur Strömungsrichtung angeordnet ist, läßt sich ein innerer Lappen 8a zu einer Seite verbiegen, während ein äußerer Lappen 8b zur anderen Seite ausgebeult werden kann. Auch so entsteht eine hutzenähnliche Struktur. Auch bei den anderen Ausführungsbeispielen mit Ausstanzungen 15 lassen sich Lappen 9a, 9b; 10a, 10b; 11a, 11b, 11c; 12a, 12b, 12c, 12d; 13a, 13b; 14a, 14b in den Randbereichen zu den beiden Seiten des Bleches herausbiegen, wie gestrichelt und durch Pfeile angedeutet ist. Dabei entstehen jeweils Konfigurationen, die ein Abschälen einer Grenzschicht von einer Strömung ermöglichen.

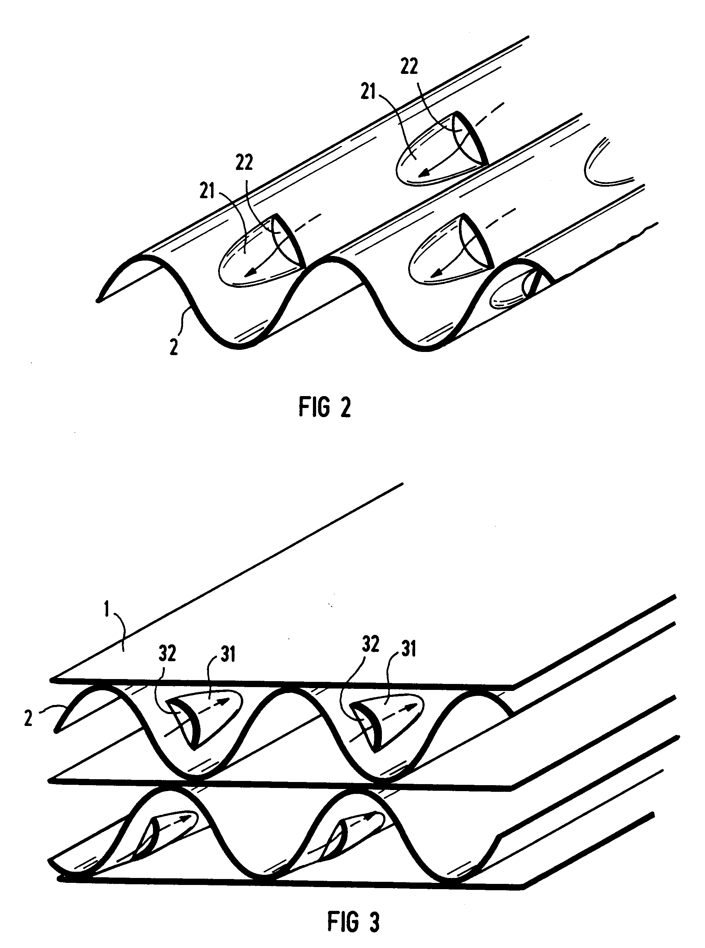

Figur 2 zeigt, wie bei einem gewellten Blech zwei Hutzen 21 mit ihren entsprechenden Öffnungen 22 im Flankenbereich der Wellung angeordnet werden können. Sind die Öffnungen 22 entgegen einer Strömung gerichtet, so wird ein Teil der Strömung durch die Hutzen 21 gedrückt. Sind die Hutzen in Strömungsrichtung offen, so wirken sie wie Saughütchen, so daß ein Teil des Fluids aus einem Nachbarkanal in den Kanal mit den Hutzen gesaugt wird.

Figur 3 veranschaulicht die Verhältnisse in einem aus glatten Blechen 1 und gewellten Blechen 2 gewickelten oder geschichteten Körper. Die Hutzen 31 und Öffnungen 32 im Flankenbereich der gewellten Bleche 2 beeinträchtigen ein Stapeln oder Wickeln der Bleche nicht, da weiterhin definierte Anlagelinien zwischen den glatten 1 und gewellten Blechen 2 bestehen.

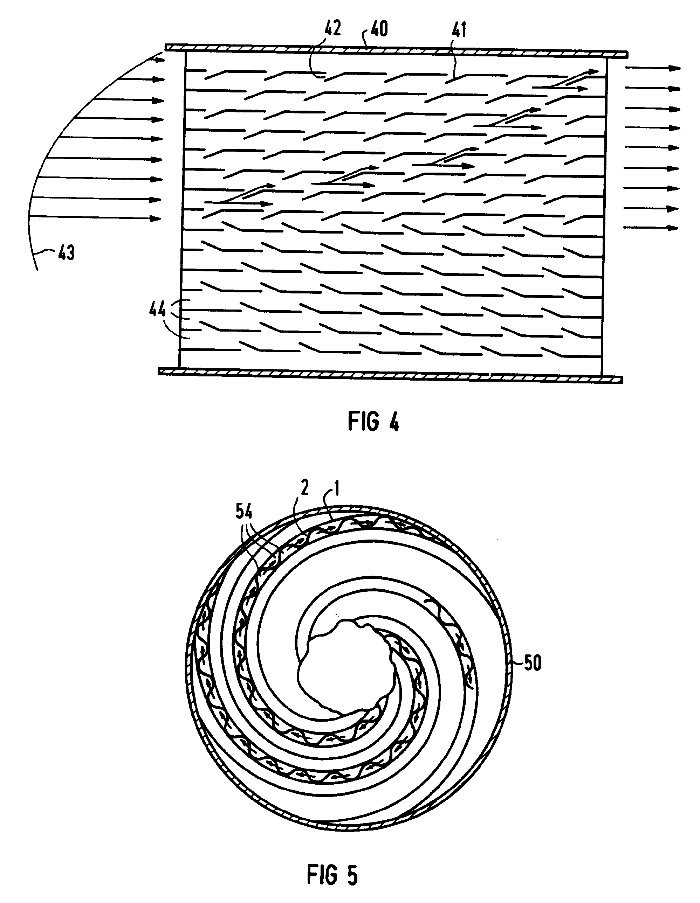

Figur 4 zeigt schematisch eine mögliche Verteilung von Strömungsleitflächen 41 und Öffnungen 42 in einem Wabenkörper, der von einem Mantelrohr 40 umgeben ist. Angeströmt wird der Wabenkörper im allgemeinen von einer Strömung mit einem parabelförmigen Profil 43, so daß nicht alle Kanäle 44 gleiche Volumenströme erhalten. Die im Längsaxialschnitt schematisch angedeutete Verteilung der Strömungsleitflächen 41 bewirkt eine Vergleichmäßigung des Strömungsprofils, indem aus den inneren Kanälen mit hohem Volumenstrom immer wieder Teilströme in weiter außen liegende, benachbarte Kanäle mit niedrigerem Volumenstrom gelenkt werden. Gemäß Figur 5 läßt sich eine solche Teilung der Strömungsleitflächen besonders günstig bei Wabenkörpern erreichen, welche zumindest im Außenbereich aus etwa evolventenförmig verlaufenden Schichten aus glatten 1 und gewellten 2 Blechen bestehen. Wie durch Pfeile angedeutet ist, kann die Strömung durch Öffnungen und Strömungsleitflächen immer wieder teilweise in benachbarte und weiter außen liegende Kanäle 54 abgezweigt werden, wodurch ein Ausgleich der Volumenströme von innen nach außen stattfindet.

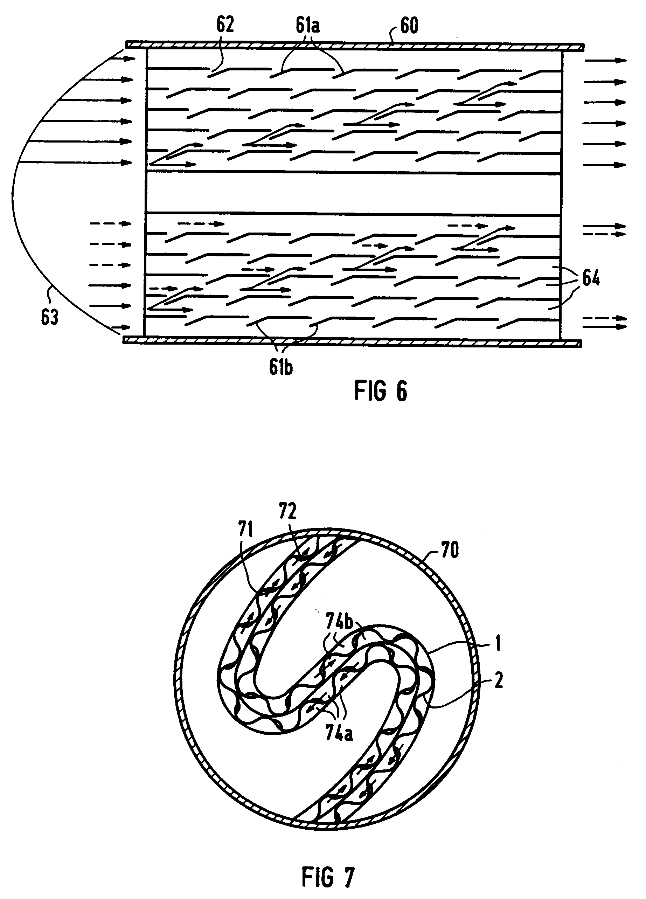

Figur 6 veranschaulicht schematisch im Längsaxialschnitt die Anordnung von Öffnungen 62 und Strömungsleitflächen 61a, 61b in einem Wabenkörper, der nicht nur auf einen Ausgleich des Strömungsprofils, sondern auch für eine Vermischung der Strömungen ausgelegt ist. Der ganze Wabenkörper ist in einem Mantelrohr 60 angeordnet, wird von einem etwa parabelförmigen Strömungsprofil 63 angeströmt und weist eine Vielzahl von Kanälen 64 auf. In Teilbereichen des Wabenkörpers sind die Strömungsleitflächen 61a so gerichtet, daß sie Teilströme der Volumenströme von innen nach außen ablenken, während in anderen Teilbereichen Volumenströme von außen nach innen umgelenkt werden.

Figur 7 zeigt anhand eines Querschnittes durch eine Wabenkörper mit etwa S-förmigen Blechlagen, wie ein die Vermischung unterstützender Körper mit Strömungsleitflächen 71 und Öffnungen 72 versehen sein kann. Der Wabenkörper in Figur 7 besteht aus glatten 1 und gewellten 2 Blechen, welche in einem Stapel angeordnet sind, dessen Enden gegensinnig verschlungen sind. Die Strömungsleitflächen 71 und Öffnungen 72 sind in den einzelnen Lagen gewellter Bleche an unterschiedlichen Flanken angeordnet oder unterschiedlich ausgerichtet, so daß beispielsweise in zwei benachbarten Lagen von Kanälen 74a bzw. 74b unterschiedlich gerichtete Teilströme abgezweigt werden. Bei einem reinen Mischkörper ist diese Konfiguration besonders günstig. Soll zusätzlich eine Vergleichmäßigung des Strömungsprofils stattfinden, so können auch mehr Öffnungen für eine Strömungsabzweigung nach außen vorgesehen werden als nach innen.

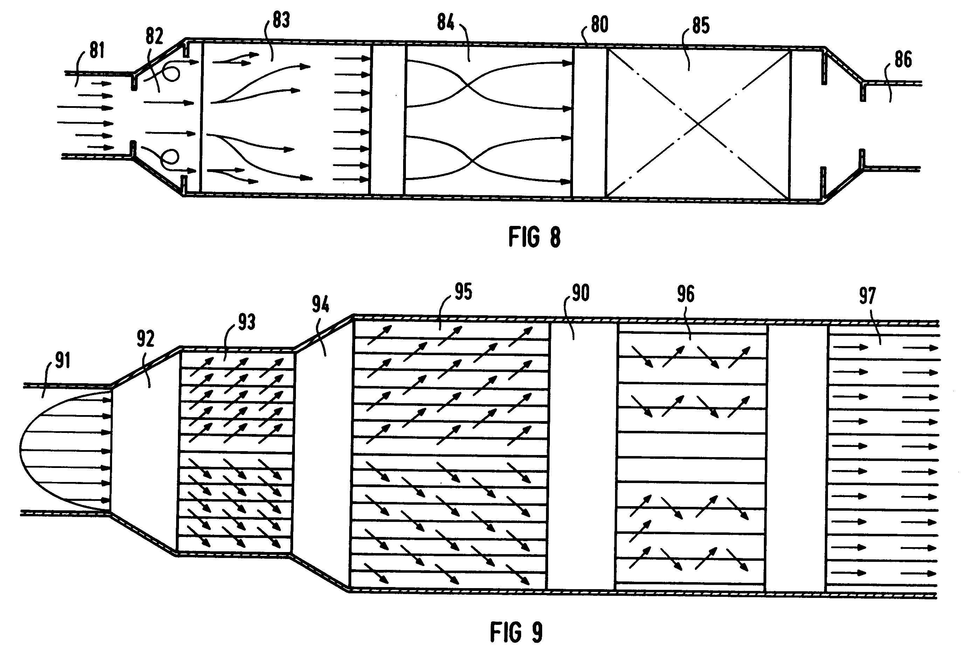

Die Figuren 8 und 9 zeigen unterschiedliche Möglichkeiten, wie ein Wabenkörper aus Teilkörpern zusammengesetzt werden kann, die unterschiedliche Charakteristiken bezüglich der Strömungsverteilung aufweisen. In Figur 8 erweitert sich eine Rohrleitung 81 in einem Difusor 82 und strömt einen ersten Teilkörper 83 an, welcher als Verteiler Teilströme der Strömung nach außen leitet und so das Strömungsprofil vergleichmäßigt, wie durch Pfeile angedeutet wird. Diesem Teilkörper schließt sich ein reiner Mischkörper 84 an, der beispielsweise gemäß Figur 7 ausgebildet sein kann. Falls nötig kann in dem gleichen Mantelrohr 80 noch ein weiterer Teilkörper 85 als Flächereserve vorhanden sein, welcher keine speziellen Eigenschaften bezüglich der Strömungsführung aufweisen muß. Anschließend geht das Mantelrohr 80 wieder in eine Auslaßleitung 86 über.

Noch günstiger in Bezug auf die Strömungseigenschaften kann eine Anordnung gemäß Figur 9 sein. Ein Abgasrohr 91 geht über einen Difusor 92 in einen ersten Teilkörper 93 über, welcher eine Vorverteilung und Vergleichmäßigung der Strömung bewirkt. Hieran schließt sich ein zweiter Difusor 94 an, dem ein zweiter Teilkörper 95 mit im wesentlichen nach außen gerichteter Strömungsleitcharakteristik folgt. Diese Anordnung hat einen sehr geringen Druckverlust, der in den Körpern 93 und 95 sogar negativ sein kann. Es können noch in einem gemeinsamen Mantelrohr 90 angeorndete weitere Teilkörper 96 bzw. 97 zum Vermischen bzw. als Flächenreserve folgen. Günstig kann es sein, wenn die aufeinanderfolgenden Teilkörper unterschiedliche Zellenzahlen pro Flächeneinheit aufweisen. So könnte der erste Wabenkörper 93 bespielsweise eine Zellenzahl von 50 oder 100 Cpi (Cells per square inch), der zweite Teilkörper 95 100 oder 200 Cpi, der dritte Teilkörper 96 z. B. 200 Cpi und der als Flächenreserve dienende Teilkörper 97 400 Cpi aufweisen. Figur 9 dient nur zur Veranschaulichung der Vielzahl von Möglichkeiten, die die erfindungsgemäße Ausbildung von Wabenkörpern in systemtechnischer Hinsicht bietet.

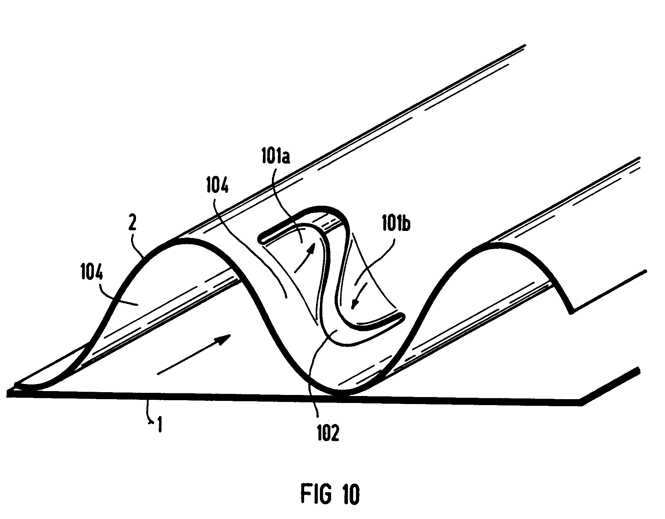

Figur 10 zeigt zur Veranschaulichung der fertigungstechnischen Besonderheiten ein gewelltes Blech 2 mit einem etwa S-förmigen Schlitz 102, welcher schräg zur Strömungsrichtung angeordnet ist. Dieser vor dem Wellen des Bleches 2 angebrachte Schlitz 102 begrenzt zwei Lappen 101a, 101b, welche beim Wellen, z. B. mit Wellwalzen mit Evolventenverzahnung, nicht genau in der gewellten Fläche zu Liegen kommen, sondern aufgrund der Elastizität des Materials leicht in verschiedene Richtungen aus der Ebene des gewellten Bleches 2 herausgebogen sind. Dadurch entstehen Strömungsleitflächen 101a, 101b, welche zu einer Querströmung zwischen den benachbarte Kanälen 104 führen.

Die erfindungsgemäßen Wabenkörper wurden zwar hauptsächlich anhand ihrer Vorteile bei der Verwendung als Katalysator-Trägerkörper erläutert, jedoch ist ihre Anwendung nicht hierauf beschränkt. Es sei erwähnt, daß erfindungsgemäße Wabenkörper auch für direkt elektrisch beheizbare Katalysatoren in Betracht kommen, da der Widerstand der Bleche durch die Öffnungen zunimmt, was erwünscht ist. Auch andere Anwendungen zur Vergleichmäßigung von Strömungen und dergleichen sind denkbar.

## Patentansprüche

1. Wabenkörper, insbesondere Katalysatorkörper für Kraftfahrzeuge, aus lagenweise angeordneten, zumindest in Teilbereichen strukturierten Blechen (1, 2), die die Wände einer Vielzahl von für ein Fluid durchströmbaren Kanälen (44; 54; 64; 74a, 74b) bilden, **dadurch gekennzeichnet,** daß zumindest in einem Teil der Kanalwände Öffnungen (22; 32; 42; 52; 62; 72) vorhanden sind, denen Strömungsleitflächen (21; 31; 41; 51; 61a, 61b; 71) zugeordnet sind, welche schräg zur Kanalwand verlaufen, wobei der Wabenkörper aus einem Stapel zumindest im Außenbereich etwa evolventenförmig und/oder S-förmig verlaufenden strukturierten Blechlagen (1, 2) besteht, wobei die Strömungsleitflächen (21; 31; 41; 51; 61a, 61b; 71) so gerichtet sind, daß sie Teilströme von Fluid entlang den Blechlagen (1, 2) von innen nach außen oder umgekehrt leiten können.

2. Wabenkörper nach Anspruch 1, **dadurch** **gekennzeichnet,** daß die Strömungsleitflächen (21; 31; 41; 51; 61a, 61b; 71) aus den Kanalwänden herausgedrückt sind unter Belassung entsprechender Öffnungen (22; 32; 42; 52; 62; 72).

3. Wabenkörper nach Anspruch 1 oder 2, **dadurch** **gekennzeichnet,** daß die Strömungsleitflächen (21; 31; 41; 51; 61a, 61b; 71) 5-50 % vorzugsweise etwa 10-20 %, des in ihrer direkten Umgebung gegebenen Querschnitts der Kanäle (44; 54; 64; 74a, 74b) abdecken.

4. Wabenkörper nach Anspruch 1, 2 oder 3, **dadurch** **gekennzeichnet**, daß die Strömungsleitflächen (21; 31; 41; 51; 61a, 61b; 71) in bezug auf die Mittelachse oder Mittelebene des Wabenkörpers schräg nach außen bzw. schräg nach innen weisen, d. h. eine Richtungskomponente in radialer Richtung haben.

5. Wabenkörper nach Anspruch 1, **dadurch** **gekennzeichnet**, daß der Wabenkörper im wesentlichen aus abwechselnden Lagen glatter (1) und gewellter (2) Bleche aufgebaut ist, wobei die Strömungsleitflächen (21; 31; 71) und Öffnungen (22; 32; 72) im Flankenbereich der Wellungen angeordnet sind.

6. Wabenkörper nach Anspruch 5, **dadurch** **gekennzeichnet**, daß zusätzliche Öffnungen in den glatten Blechen (1) vorhanden sind.

7. Wabenkörper nach einem der vorhergehenden Ansprüche, **dadurch** **gekennzeichnet**, daß die Strömungsleitflächen (21; 31; 41; 51; 61a, 61b; 71) etwa 5 bis 50 % des in ihrer direkten Umgebung gegebenen Kanalquerschnittes überdecken.

8. Wabenkörper nach einem der vorhergehenden Ansprüche, **dadurch gekennzeichnet**, daß die Strömungsleitflächen (21; 31; 41; 51; 61a, 61b; 71) schräg entgegen der Strömungsrichtung des Fluids gerichtet sind.

9. Wabenkörper nach einem der Ansprüche 1 bis 7, **dadurch gekennzeichnet**, daß die Strömungsleitflächen (21; 31; 41; 51; 61a, 61b; 71) schräg in Strömungsrichtung des Fluids gerichtet sind.

10. Wabenkörper nach einem der vorhergehenden Ansprüche, **dadurch gekennzeichnet,** daß die Strömungsleitflächen (41) in Größe und Schrägstellung vorwiegend so angeordnet sind, daß sie durch ihre Schrägstellung einen Teil eines im Zentralbereich des Wabenkörpers strömenden Fluids nach außen leiten.

11. Wabenkörper nach einem der Ansprüche 1 bis 9, **dadurch** **gekennzeichnet**, daß ein Teil der strömungsleitflächen (61a bzw. 61b; 71) in mindestens einem Teilbereich des Wabenkörpers durch eine erste Schrägstellung Teilströme von Fluid nach außen und in mindestens einem anderen Teilbereich durch eine zweite entgegengesetzte Schrägstellung Teilströme nach innen leiten kann.

12. Wabenkörper nach einem der vorhergehenden Ansprüche, **da****durch gekennzeichnet**, daß der Wabenkörper aus mehreren, axial hintereinanderliegenden Teilkörpern oder Teilbereichen (83, 84, 85; 93, 95, 96, 97) aufgebaut ist, die im Mittel unterschiedliche Charakteristiken bezüglich der Verteilung der Fluidströme aufweisen.

13. Wabenkörper nach Anspruch 12, **dadurch gekenn****zeichnet**, daß zumindest der erste Teilkörper oder Teilbereich (83; 93) im Mittel Fluidströme vom Zentralbereich durch Schrägstellung der Strömungsleitflächen nach außen leitet.

14. Wabenkörper nach einem der vorhergehenden Ansprüche, **dadurch gekennzeichnet**, daß die Strömungsleitflächen die Form von Hutzen (3; 21; 31; 71) haben.

15. Wabenkörper nach einem der Ansprüche 1 bis 13, **dadurch gekennzeichnet**, daß die Strömungsleitflächen (4; 7a, 7b; 11a, 11b, 11c; 12a, 12b, 12c, 12d) bzw. (5; 6) Dreiecke bzw. Vierecke sind, die bis auf eine Kante aus den Blechen herausgeknickt oder herausgebogen sind.

16. Wabenkörper nach einem der Ansprüche 1 bis 13, **dadurch gekennzeichnet**, daß die Strömungsleitflächen unregelmäßig berandete Flächen mit abgerundeten Konturen sind, welche um Schlitze oder Aussparungen herum aus der Blechebene nach einer oder beiden Seiten herausstehen.

17. Wabenkörper nach einem der Ansprüche 1 bis 13, **dadurch gekennzeichnet**, daß die Öffnungen (15; 16) ihre längste Dimension annähernd in Strömungsrichtung oder in einem spitzen Winkel dazu haben, wobei die Strömungsleitflächen (4) vorzugsweise eine Delta-Flügel-ähnliche Konfiguration bilden, die eine Verwirbelung der Strömung bei geringem Druckverlust erzeugt.

18. Wabenkörper nach einem der vorhergehenden Ansprüche, **dadurch gekennzeichnet**, daß die Strömungsleitflächen (4; 5; 6; 7a, 7b; 8a, 8b; 9a, 9b; 10a, 10b; 11a, 11b, 11c; 12a, 12b, 12c, 12d; 13a, 13b; 14a, 14b) durch Wellen eines mit entsprechenden Schlitzen bzw. Öffnungen (16 bzw. 15) versehenen Bleches (2) hergestellt sind.

## Claims

1. A honeycomb body, in particular a catalyst body for motor vehicles, comprising metal sheets (1, 2) which are arranged layer-wise and which are structured at least in portions thereof and which form the walls of a plurality of passages (44; 54; 64; 74a, 74b) through which a fluid can flow, characterised in that provided at least in a part of the passage walls are openings (22; 32; 42; 52; 62; 72) with which there are associated flow guide surfaces (21; 31; 41; 51; 61a, 61b; 71) which extend inclinedly relative to the passage wall, wherein the honeycomb body comprises a stack of structured sheet metal layers (1, 2) which extend at least in the outer region in an approximately involute and/or S-shaped configuration, wherein the flow guide surfaces (21; 31; 41; 51; 61a, 61b; 71) are so directed that they can guide the partial flows of fluid along the sheet metal layers (1, 2) from the inside outwardly or vice-versa.

2. A honeycomb body according to claim 1 characterised in that the flow guide surfaces (21; 31; 41; 51; 61a, 61b; 71) are pressed out of the passage walls, leaving corresponding openings (22; 32; 42; 52; 62; 72).

3. A honeycomb body according to claim 1 or claim 2 characterised in that the flow guide surfaces (21; 31; 41; 51; 61a, 61b; 71) cover from 5 to 50%, preferably from about 10 to 20%, of the cross-section, which is provided in their direct vicinity, of the passages (44; 54; 64; 74a, 74b).

4. A honeycomb body according to claims 1, 2 or 3 characterised in that the flow guide surfaces (21; 31; 41; 51; 61a, 61b; 71) face inclinedly outwardly or inclinedly inwardly in relation to the centre line or central plane of the honeycomb body, that is to say they have a directional component in a radial direction.

5. A honeycomb body according to claim 1 characterised in that the honeycomb body is essentially built up from alternate layers of smooth (1) and corrugated (2) metal sheets, wherein the flow guide surfaces (21; 31; 71) and openings (22; 32; 72) are arranged in the flank region of the corrugations.

6. A honeycomb body according to claim 5 characterised in that additional openings are provided in the smooth metal sheets (1).

7. A honeycomb body according to one of the preceding claims characterised in that the flow guide surfaces (21; 31; 41; 51; 61a, 61b; 71) cover from about 5 to 50% of the passage cross-section in the direct vicinity of the flow guide surfaces.

8. A honeycomb body according to one of the preceding claims characterised in that the flow guide surfaces (21; 31; 41; 51; 61a, 61b; 71) are directed inclinedly against the direction of flow of the fluid.

9. A honeycomb body according to one of claims 1 to 7 characterised in that the flow guide surfaces (21; 31; 41; 51; 61a; 61b; 71) are directed inclinedly in the direction of the flow of the fluid.

10. A honeycomb body according to one of the preceding claims characterised in that the flow guide surfaces (41) are predominantly so arranged in terms of size and inclined positioning that by virtue of their inclined positioning they guide outwardly a part of a fluid flowing in the central region of the honeycomb body.

11. A honeycomb body according to one of claims 1 to 9 characterised in that a part of the flow guide surfaces (61a or 61b; 71) can guide partial flows of fluid outwardly in at least one portion of the honeycomb body by virtue of a first inclined positioning and can guide partial flows inwardly in at least one other portion by a second oppositely disposed inclined positioning.

12. A honeycomb body according to one of the preceding claims characterised in that the honeycomb body is made up of a plurality of axiallysuccessive sub-bodies or portions (83, 84, 85; 93, 95, 96, 97) which have different characteristics on average in respect of distribution of the flows of fluid.

13. A honeycomb body according to claim 12 characterised in that at least the first sub-body or portion (83; 93) on average guides flows of fluid from the central region outwardly due to inclined positioning of the flow guide surfaces.

14. A honeycomb body according to one of the preceding claims characterised in that the flow guide surfaces are in the shape of scoops (3; 21; 31; 71).

15. A honeycomb body according to one of claims 1 to 13 characterised in that the flow guide surfaces (4; 7a, 7b; 11a, 11b, 11c; 12a, 12b, 12c, 12d) or (5; 6) are triangles or quadrangles which except for an edge are bent or curved out of the metal sheets.

16. A honeycomb body according to one of claims 1 to 13 characterised in that the flow guide surfaces are irregularly edged surfaces with rounded-off contours which project out of the plane of the metal sheet towards one or both sides around slots or recesses.

17. A honeycomb body according to one of claims 1 to 13 characterised in that the openings (15; 16) have their longest dimension approximately in the flow direction or at an acute angle thereto, wherein the flow guide surfaces (4) preferably form a delta-wing-like configuration which produces turbulence in the flow with a low pressure drop.

18. A honeycomb body according to one of the preceding claims characterised in that the flow guide surfaces (4; 5; 6; 7a, 7b; 8a, 8b; 9a, 9b; 10a, 10b; 11a, 11b, 11c; 12a, 12b, 12c, 12d; 13a, 13b; 14a, 14b) are produced by corrugating a metal sheet (2) provided with suitable slots or openings (16 or 15 respectively).

## Revendications

1. Corps alvéolaire, en particulier corps de catalyseur pour véhicule à moteur, en tôles (1, 2) disposées par couches et structurées au moins dans des zones partielles, tôles qui forment les parois d'une pluralité de canaux (44 ; 54; 64 ; 74a ; 74b) traversables par un courant de fluide, **caractérisé en ce qu'**
il est prévu, au moins dans une partie des parois de canal, des ouvertures (22 ; 32 ; 42 ; 52 ; 62; 72) auxquelles sont associées des surfaces de guidage du courant (21 ; 31 ; 41 ; 51 ; 61a ; 61b ; 71) qui s'étendent obliquement par rapport à la paroi du canal, le corps alvéolaire se composant d'un empilement de couches de tôles (1, 2) structurées s'étendant approximativement en forme de développante et/ou en forme de S au moins dans une zone extérieure, les surfaces de guidage du courant (21 ; 31; 41 ; 51 ; 61a; 61b ; 71) étant arrangées de manière à pouvoir guider des courants partiels de fluide le long des couches de tôles (1, 2) de l'intérieur vers l'extérieur ou inversement.

2. Corps alvéolaire selon la revendication 1, **caractérisé en ce que**les surfaces de guidage du courant (21 ; 31 ; 41 ; 51 ; 61a ; 61b; 71) sont formées par repoussage en laissant subsister en réserve les ouvertures correspondantes (22 ; 32 ; 42 ; 52 ; 62 ; 72).

3. Corps alvéolaire selon la revendication 1 ou 2,**caractérisé en ce que** les surfaces de guidage du courant (21 ; 31; 41 ; 51 ; 61a; 61b ; 71) couvrent 5 à 50 %, de préférence environ 10 à 20 %, de la section des canaux (44 ; 54 ; 64 ; 74a ; 74b) formée à leur voisinage direct.

4. Corps alvéolaire selon la revendication 1, 2 ou 3, **caractérisé en ce que** les surfaces de guidage du courant (21 ; 31 ; 41 ; 51 ; 61a ; 61b ; 71) se présentent obliquement vers l'extérieur ou vers l'intérieur par rapport à l'axe médian ou au plan médian du corps alvéolaire, c'est-à-dire qu'elles possèdent un composante d'orientation en direction radiale.

5. Corps alvéolaire selon la revendication 1, **caractérisé en ce que** le corps alvéolaire est construit de façon générale à partir de couches de tôles alternativement lisses (1) et ondulées (2), les surfaces de guidage du courant (21 ; 31 ; 71) et les ouvertures (22 ; 32 ; 72) étant disposées dans une zone de flanc des ondulations.

6. Corps alvéolaire selon la revendication 5, **caractérisé en ce qu'il** est prévu des ouvertures additionnelles dans les tôles lisses (1).

7. Corps alvéolaire selon l'une des revendications précédentes, **caractérisé en ce que** les surfaces de guidage du courant (21 ; 31 ; 41 ; 51 ; 61a ; 61b ; 71) s'étendent sur environ 5 à 50 % de la section de canal formée à leur voisinage direct.

8. Corps alvéolaire selon l'une des revendications précédentes, **caractérisé en ce que** les surfaces de guidage du courant (21 31 ; 41 ; 51 ; 61a ; 61b ; 71) sont arrangées obliquement contre la direction du courant.

9. Corps alvéolaire selon l'une des revendications précédentes, **caractérisé en ce que** les surfaces de guidage du courant (21 ; 31 ; 41 ; 51 ; 61a ; 61b ; 71) sont arrangées obliquement dans la direction du courant.

10. Corps alvéolaire selon l'une des revendications précédentes, **caractérisé en ce que** les surfaces de guidage du courant (41) sont disposées de façon prépondérante par leur taille et leur obliquité de manière à pouvoir guider vers l'extérieur grâce à leur obliquité une partie d'un fluide passant dans la zone centrale du corps alvéolaire.

11. Corps alvéolaire selon l'une des revendications 1 à 9, **caractérisé en ce qu'**une partie des surfaces de guidage du courant (61a ou 61b ; 71) peuvent, dans au moins une zone partielle du corps alvéolaire, guider vers l'extérieur des courants partiels de fluide grâce à une première obliquité et, dans au moins une autre zone partielle, guider vers l'intérieur des courants partiels grâce à une seconde obliquité, de disposition opposée.

12. Corps alvéolaire selon l'une des revendications précédentes, **caractérisé en ce que** le corps alvéolaire est construit à partir de plusieurs corps partiels ou zones partielles (83, 84, 85 ; 93, 95, 96, 97) s'étendant axialement les un(e)s à la suite des autres et qui présentent au milieu des caractéristiques différentes relatives au fractionnement des courants de fluide.

13. Corps alvéolaire selon la revendication 12, **caractérisé en ce qu'**au moins le premier corps partiel ou la première zone partielle (83 ; 93) au milieu guide vers l'extérieur les courants de fluide de la zone centrale grâce à une obliquité des surfaces de guidage de fluide.

14. Corps alvéolaire selon l'une des revendications précédentes, **caractérisé en ce que** les surfaces de guidage du courant sont en forme de godets (3 ; 21 ; 31 ; 71).

15. Corps alvéolaire selon l'une des revendications 1 à 13, **caractérisé en ce que** les surfaces de guidage du courant (4 ; 7a, 7b ; 11a, 11b, 11c ; 12a, 12b, 12c, 12d) ou (5 ; 6) sont des triangles ou des quadrilatères qui sont sortis des tôles par pliage ou cintrage vers l'extérieur sur un de leurs côtés.

16. Corps alvéolaire selon l'une des revendications 1 à 13, **caractérisé en ce que** les surfaces de guidage du courant sont des surfaces formées avec des bords irréguliers et des contours arrondis qui font saillie du plan de la tôle, d'un côté ou des deux, sous la forme de fentes ou d'ouvertures subsistantes.

17. Corps alvéolaire selon l'une des revendications 1 à 13, **caractérisé en ce que** les ouvertures (15 ; 16) ont leur plus grande dimension qui approche la direction du courant ou forme un angle aigu avec celle-ci, les surfaces de guidage du courant (4) formant de préférence une configuration semblable à une aile delta produisant une mise en turbulence du courant par un faible abaissement de pression.

18. Corps alvéolaire selon l'une des revendications précédentes, **caractérisé en ce que** les surfaces de guidage du courant (4; 5 ; 6 ; 7a, 7b ; 8a, 8b ; 9a, 9b ; 10a, 10b ; 11a, 11b, 11c ; 12a, 12b, 12c, 12d ; 13a, 13b ; 14a, 14b) sont réalisées par ondulation d'une tôle (2) pourvue de fentes ou d'ouvertures (16 ou 15) correspondantes.
